# EUROPEAN PATENT APPLICATION

(11) **EP 4 535 256 A1**
(43) Date of publication of application: **09.04.2025**
(21) Application number: 24809528.3
(22) Date of filing: 22.07.2024
(51) Int. Cl.: G06Q 10/083, G06Q 50/06

(54) **MANAGEMENT METHOD AND APPARATUS FOR PORTABLE POWER SOURCE, AND RELATED DEVICE**

(30) Priority: 22.08.2023 CN 202311057521
(71) Applicant: Shenzhen Ampere Time Digital Energy Technology Co., Ltd., Shenzhen, Guangdong 518100 (CN)
(72) Inventor: LU, Haijun, Shenzhen, Guangdong 518100 (CN); ZHANG, Haifeng, Shenzhen, Guangdong 518100 (CN); YAN, Weiyang, Shenzhen, Guangdong 518100 (CN)
(74) Representative: Ipside
(86) International application number: PCT/CN2024/106642
(87) International publication number: WO 2025/039815

(57) **Abstract**

The disclosure provides a portable power management method and apparatus, and a related device. The method includes the following. A server receives a delivery request sent by a user terminal, where the delivery request is sent in response to a confirmation instruction. The server determines a first battery exchange station within a preset distance range from a location of the user terminal in response to the delivery request. The server determines a second portable power that matches the delivery request from portable powers included in the first battery exchange station. The server generates a delivery task for the second portable power based on the location of the user terminal and indication information of the second portable power. The server sends the delivery task for the second portable power to a delivery terminal, where the delivery task indicates that the second portable power is to be delivered to the location of the user terminal. According to the method, users do not need to go to a battery exchange station when replacing a power, thereby allowing their outdoor activities to be continued normally and improving user experience of using the portable power.

## Description

### CROSS-REFERENCE

This application claims priority to Chinese Patent Application No. 2023110575216, filed August 22, 2023, and entitled "PORTABLE POWER MANAGEMENT METHOD AND APPARATUS, AND RELATED DEVICE", the entire disclosure of which is incorporated herein by reference.

### TECHNICAL FIELD

The present disclosure relates to the field of circuit devices or systems for power supply, or circuit devices or systems for power distribution in the new energy industry, and in particular, to a portable power management method and apparatus, and a related device.

### BACKGROUND

Nowadays, outdoor activities have been integrated into our lives, which has become a trend as the material conditions and the living standard improve, and is a relatively healthy way of living. For those who are engaged in outdoor works, enjoy road trip, or love outdoor sports, outdoor power shortage is an urgent problem that needs to be solved. However, with the emergence of portable powers, the problem of outdoor power shortage has been solved.

When using a portable power, there is a high possibility that the battery level of the portable power is insufficient. In this case, users need to go to a battery exchange station to replace the portable power, which is time-wasting. Especially, for those users who are engaged in outdoor works (such as outdoor live-streaming, setting up street stalls), replacing the power on their own means that their works are unable to be continued normally, and even causes economic and popularity losses for the users, affecting user experience of using the portable power.

### SUMMARY

The disclosure provides a portable power management method and apparatus, and a related device. With the method provided in the disclosure, users do not need to go to a battery exchange station when replacing a power, thereby allowing their outdoor activities to be continued normally and improving user experience of using the portable power.

In a first aspect, the disclosure provides a portable power management method. The method includes the following. A server receives a delivery request sent by a user terminal, where the delivery request is sent in response to a confirmation instruction. The confirmation instruction is input by a first user in response to a delivery prompt information, and the delivery prompt information is output by the user terminal when a live-streaming application is running, a shooting apparatus is used, and state information of a first portable power does not meet a preset condition. The delivery prompt information is used to prompt whether to replace the first portable power. The server determines a first battery exchange station within a preset distance range from a location of the user terminal in response to the delivery request. The server determines a second portable power that matches the delivery request from portable powers included in the first battery exchange station. The server generates a delivery task for the second portable power based on the location of the user terminal and indication information of the second portable power, where the indication information of the second portable power includes identification information and location information. The server sends the delivery task for the second portable power to a delivery terminal, where the delivery task indicates that the second portable power is to be delivered to the location of the user terminal.

In a second aspect, the disclosure provides a portable power management apparatus. The apparatus includes an obtaining unit, a determining unit, a generating unit, and a sending unit. The obtaining unit is configured to receive a delivery request sent by the user terminal, where the delivery request is sent in response to a confirmation instruction. The determining unit is configured to determine a first battery exchange station within a preset distance range from a location of the user terminal in response to the delivery request. The determining unit is further configured to determine a second portable power that matches the delivery request from portable powers included in the first battery exchange station. The generating unit is configured to generate a delivery task for the second portable power based on the location of the user terminal and indication information of the second portable power. The sending unit is configured to send the delivery task for the second portable power to a delivery terminal.

In a third aspect, the disclosure provides a portable power management server, including a processor, a network interface, and a memory. The memory is configured to store a computer program. The computer program includes a program instruction, and the processor is configured to invoke the program instruction to execute the portable power management method of the first aspect.

In a fourth aspect, the disclosure provides a computer-readable storage medium, where the computer-readable storage medium stores a computer program. The computer program includes a program instruction which, when executed by a processor, causes the processor to perform the portable power management method of the first aspect.

In a fifth aspect, the disclosure provides a computer program product. The computer program product includes a non-transitory computer-readable storage medium storing a computer program. The computer program is operated to enable a computer to execute part of or all the operations described in the first aspect of embodiments of the disclosure.

It may be seen that, in embodiments of the disclosure, after the server receives the delivery request sent by the user terminal in response to the confirmation instruction that is triggered by the first user, the server obtains the location of the user terminal. The server obtains the first battery exchange station within the preset distance range based on the location of the user terminal, and determines the second portable power that matches the delivery request from portable powers included in the first battery exchange station. The server then generates the delivery task based on the indication information of the second portable power and the location of the user terminal. The indication information includes location information and identification information of the second portable power. Finally, the delivery task is sent to the delivery terminal, where the delivery task indicates that the second portable power is to be delivered to the location of the user terminal. According to the method, users do not need to go to a battery exchange station when replacing a power, thereby allowing their outdoor activities to be continued normally and improving user experience of using the portable power.

### BRIEF DESCRIPTION OF THE DRAWINGS

In order to describe technical solutions of embodiments of the disclosure more clearly, the following will give a brief introduction to the accompanying drawings used for describing the embodiments. Apparently, the accompanying drawings hereinafter described are some embodiments of the present disclosure. Based on these drawings, those of ordinary skill in the art can also obtain other drawings without creative effort.
FIG. 1 is a diagram of a system architecture of a portable power management system provided in an embodiment of the disclosure.
FIG. 2 is a schematic flow chart of a portable power management method provided in an embodiment of the disclosure.
FIG. 3 is an exemplary diagram of a message notification interface displayed by a user terminal provided in an embodiment of the disclosure.
FIG. 4 is an exemplary diagram of another message notification interface displayed by a user terminal provided in an embodiment of the disclosure.
FIG. 5 is a schematic flow chart of another portable power management method provided in an embodiment of the disclosure.
FIG. 6 is a schematic structural diagram of a portable power management apparatus provided in an embodiment of the disclosure.
FIG. 7 is a schematic structural diagram of a server provided in an embodiment of the disclosure.

### DETAILED DESCRIPTION

In order to enable those skilled in the art to better understand the solutions of the disclosure, the following will clearly and completely illustrate technical solutions of embodiments of the disclosure with reference to the accompanying drawings of embodiments of the disclosure. Apparently, embodiments described herein are merely some embodiments, rather than all embodiments, of the disclosure. Based on the embodiments of the disclosure, all other embodiments obtained by those of ordinary skill in the art without creative effort shall fall within the protection scope of the disclosure.

The terms "first", "second", or the like in the description, claims of the present disclosure, and the above accompanying drawings are used for distinguishing different objects, rather than for describing a specific order. In addition, the terms "include", "have", and any variations thereof are intended to cover non-exclusive inclusions. For example, a process, method, system, product, or apparatus that includes a series of steps or units is not limited to the listed steps or units, but optionally further includes steps or units not listed, or optionally further includes other steps or units inherent to the process, method, product, or apparatus.

Reference to "embodiment" herein means that a particular feature, structure, or characteristic described in conjunction with the embodiment may be included in at least one embodiment of the present disclosure. The presence of the term at each place in the specification does not necessarily refer to the same embodiment, nor does it refer to a separate or alternative embodiment that is mutually exclusive of other embodiments. It may be understood by those skilled in the art, both explicitly and implicitly, that the embodiments described herein may be combined with other embodiments.

Currently, when the battery level of a portable power is insufficient, users need to go to a battery exchange station to replace the power, which is a waste of time. Especially, for those users who are engaged in outdoor works (such as outdoor live-streaming, setting up street stalls), replacing the power on their own may even cause economic and popularity losses for the users, affecting user experience of using the portable power.

In view of this, embodiments of the disclosure provide a portable power management method. According to the method, users do not need to go to the battery exchange station to replace the power when the battery level of the portable power is insufficient. A user only has to confirm a delivery request when the portable power needs to be replaced, and a deliverer will deliver a portable power to the current location of the user. In this way, the time of the user will not be wasted, and users who are engaged in outdoor works (such as outdoor live-streaming, setting up street stalls) may work normally, which improves user experience of using the portable power.

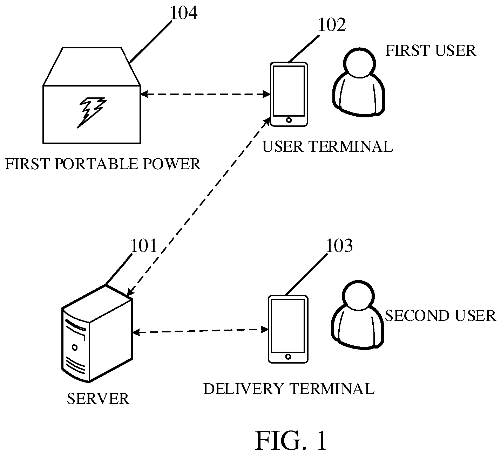

Reference is made to FIG. 1, which is a diagram of a system architecture of a portable power management system provided in an embodiment of the disclosure. As illustrated in FIG. 1, the portable power management system includes a server 101, a user terminal 102 corresponding to a first user, a delivery terminal 103 corresponding to a second user, and a first portable power 104. The user terminal 102 may by connected with the first portable power 104 through a wired connection or wireless connection. The wired connection may be realized through a data cable, a USB drive, etc. The wireless connection may be realized through Bluetooth, WiFi, network connection, etc. The user terminal 102 may include a smart phone (such as an Android^{™} mobile phone, an iOS^{™} mobile phone, a Windows mobile phone), a tablet, a palmtop, a laptop, a mobile internet device (MID), or a wearable device, etc. The delivery terminal 103 may include a smart phone (such as an Android^{™} mobile phone, an iOS^{™} mobile phone, a Windows mobile phone), a tablet, a palmtop, or a wearable device, etc. The server 101 may be connected with each of the user terminal 102 and the delivery terminal 103 through a wireless network connection. The above connections, the user terminal 102, and the delivery terminal 103 are merely exemplary but not exhaustive, and include but are not limited to the above connections, the above user terminal 102, and the above delivery terminal 103.

Power-consumption devices for which the first portable power 104 is used may include outdoor mobile office devices (such as mobile phones, tablets, laptops, printers, cameras, lighting and other devices that require charging), outdoor sports devices (such as drones, electric scooters, and other cycling products that require charging), indoor household appliances (such as lighting, fans, and other household products), vehicle-mounted devices (such as car refrigerators, car vacuum cleaners, car air purifiers, and other products), and medical devices (such as pacemakers, ventilators, aerators, electric wheelchairs, blood pressure monitors, blood glucose meters, and other emergency equipment). Output ports of the power-consumption devices may include USB, TYPE-C, etc.

In a possible embodiment, the user terminal 102 outputs a delivery prompt information when a live-streaming application is running, a shooting apparatus is used, and state information of the first portable power 104 does not meet a preset condition. The delivery prompt information is used to prompt whether to replace the portable power. After the user terminal 102 receives the confirmation instruction that is input in response to the delivery prompt information, the user terminal 102 sends a delivery request to the server 101. The server 101 determines a first battery exchange station within a preset distance range from the location of the user terminal 102 in response to the delivery request, and determines a second portable power that matches the delivery request from portable powers included in the first battery exchange station. The server 101 generates the delivery task for the second portable power based on the location of the user terminal 102 and the indication information of the second portable power. The indication information includes location information and identification information. The server 101 sends the delivery task for the second portable power to the delivery terminal 103, where the delivery task indicates that the second portable power is to be delivered to the location of the user terminal 102. According to the method, users do not need to go to a battery exchange station when replacing a power, thereby allowing their outdoor activities to be continued normally and improving user experience of using the portable power.

A portable power management method provided in embodiments of the disclosure will be introduced in the following.

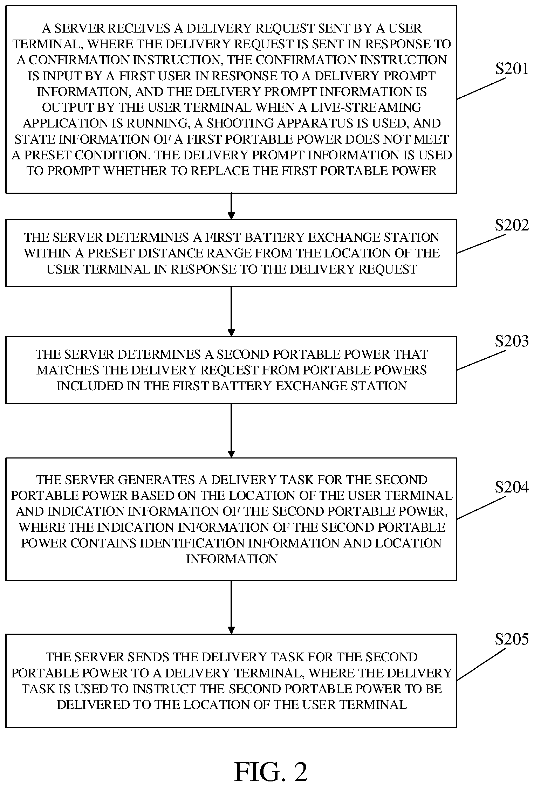

Reference is made to FIG. 2, which is a schematic flow chart of a portable power management method provided in an embodiment of the disclosure. The portable power management method may be executed by the above server 101. As illustrated in FIG. 2, the method includes the following.

At S201, a server receives a delivery request sent by a user terminal, where the delivery request is sent in response to a confirmation instruction, the confirmation instruction is input by a first user in response to a delivery prompt information, and the delivery prompt information is output by the user terminal when a live-streaming application is running, a shooting apparatus is used, and state information of a first portable power does not meet a preset condition. The delivery prompt information is used to prompt whether to replace the first portable power.

The confirmation instruction is input by the first user in response to the delivery prompt information. Specifically, the user terminal outputs the delivery prompt information through a generation interface or through a voice broadcast when the live-streaming application is running, the shooting apparatus is used, and the state information of the first portable power does not meet the preset condition. After the first user corresponding to the user terminal views or listens to the delivery prompt information output by the user terminal, the first user may input the confirmation instruction through sliding, clicking, voice, etc., if a portable power delivery service is needed. After receiving the confirmation instruction input by the first user, the user terminal sends a delivery request for the portable power to the server.

In a possible embodiment, that the state information of the first portable power does not meet the preset condition may include that a remaining battery level of the first portable power is less than or equal to a battery level threshold, or a power supply parameter of the first portable power source does not meet a preset power supply requirement. The power supply parameter of the first portable power not meeting the preset power supply requirement may include a fault in the portable power (for example, an output voltage, an output current, or an output power is less than or equal to a preset threshold), and a damage to the portable power (including damage to an external structure of the portable power or internal electrical components of the portable power).

In a possible embodiment, the battery level threshold may be a preset fixed value (for example, 20% of the maximum battery level of the first portable power). The battery level threshold may also be set based on a distance between the location of the user terminal and a location of a battery exchange station within a preset distance range from the location of the user terminal.

In a possible embodiment, the battery level threshold may be set based on a distance between the location of the user terminal and the distance of a battery exchange station within the preset distance range from the location of the user terminal. Specifically, the server searches, based on the location of the user terminal, a battery exchange station within the preset distance range from the location of the user terminal through the internet. The server obtains a distance between the user terminal and the battery exchange station, and determines the battery level threshold based on the distance. The location of the user terminal may be obtained through a global positioning system (GPS) positioning module in the user terminal.

In a possible embodiment, the battery level threshold may be determined based on a distance between the user terminal and a nearest or farthest battery exchange station. Specifically, the battery level threshold may be pre-calculated based on a distance between the user terminal and the nearest battery exchange station, or may be pre-calculated based on a distance between the user terminal and the farthest battery exchange station.

In another possible embodiment, the battery level threshold may be determined based on an average value of distances between the user terminal and a preset number of nearest battery exchange stations within the preset distance range from the location of the user terminal. For example, the server obtains distances between the user terminal and multiple nearest battery exchange stations within the preset distance range from the location of the user terminal, and the server calculates an average distance based on the distances between the user terminal and the multiple battery exchange stations. Then the server determines the battery level threshold based on the average distance.

It may be understood that, the distance to the battery exchange station is positively correlated with the battery level threshold, that is, a greater distance corresponds to a greater preset battery level threshold, and a less distance corresponds to a less preset battery level threshold. Since the second portable power needs to be picked up from the battery exchange station before the delivery, the actual battery level threshold should be greater than the theoretical battery level threshold when determining the battery level threshold based on the distance.

It may be seen that, in this embodiment, the user terminal or the server may determine the battery level threshold of the first portable power based on the distance between the location of the user terminal and the location of the battery exchange station within a preset distance range from the location of the user terminal. By adaptively setting the battery level threshold, a more scientific, reasonable, and accurate battery level threshold may be obtained, thereby further ensuring that the user receives the second portable power before the first portable power runs out of power, and allowing the outdoor activity to be continued normally.

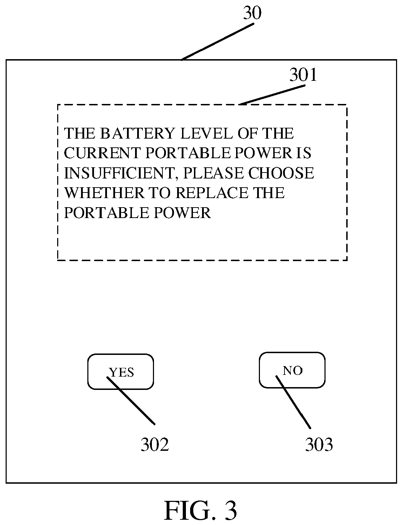

In a possible embodiment, the state information of the first portable power not meeting the preset condition exemplarily refers to that the battery level of the first portable power is insufficient. When the battery level of the first portable power is insufficient, the delivery prompt information may be output in a manner of a pop-up window on the user terminal. The display content may be as illustrated in FIG. 3. A first prompt interface 30 includes a first display region 301, a first function control 302, and a second function control 303. The first display region 301 is configured to display a first prompt text information, where content of the first prompt text information may be "the battery level of the current portable power is insufficient, please choose whether to replace the portable power". The first function control 302 may be a "Yes" button for inputting a confirmation instruction, and the second function control 303 may be a "No" button for inputting a negative instruction. In this way, it is beneficial for the first user to timely determine whether to replace the portable power when the battery level of the portable power is insufficient.

It may be understood that, when the state information of the first portable power does not meet the preset condition, the first prompt text information may be adjusted based on actual situations. For example, when a malfunction occurs in the first portable power, the content of the first prompt text information may be "malfunction occurs in the current portable power, please choose whether to replace the portable power".

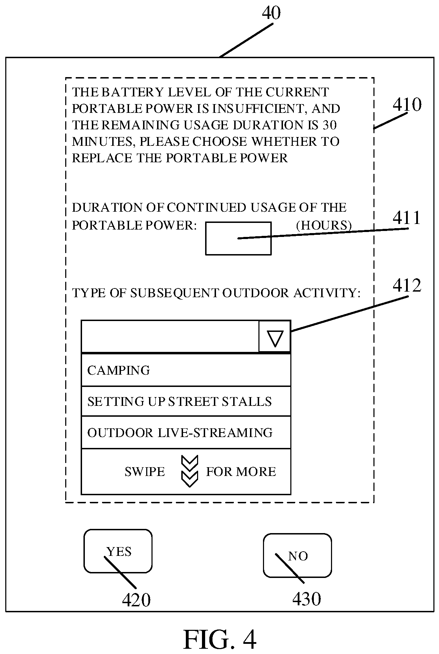

In a possible embodiment, the delivery prompt information may be output in a manner of a pop-up window on the user terminal, and the display content may be as illustrated in FIG. 4. A second prompt interface 40 includes a second display region 410, a third function control 420, a fourth function control 430. The second display region 410 includes the first prompt text information, a first input control 411, a first selection control 412. The second display region 410 is configured to display the first prompt text information, and the content of the first prompt text information may be "the battery level of the current portable power is insufficient, and the remaining usage duration is 30 minutes, please choose whether to replace the portable power". The first input control 411 and the first selection control 412 may be configured for the first user to input outdoor activity indication information, where the outdoor activity indication information may include a duration of continued usage of the portable power and a type of outdoor activity. The first input control 411 is configured to input the duration of continued usage of the portable power, and the first selection control 412 is configured to select the type of a subsequent outdoor activity (such as camping, setting up street stalls, outdoor live-streaming). The third function control 420 may be a "Yes" button for inputting a confirmation instruction, and the fourth function control 430 may be a "No" button for inputting a negative instruction. In this way, users are allowed to put forward more personalized requirements, which is beneficial to screening out a second portable power that is more suitable for user requirements in the subsequent delivery.

The second display region 410 further includes the remaining usage duration of the first portable power, which is beneficial for the first user to determine whether to replace the portable power based on a duration that the first user needs to continually use the portable power.

It may be noted that, for the first input control 411 and the first selection control 412, the first user may selectively input and select relevant information according to the requirement of the first user, which is not limited in embodiments of the disclosure.

In a possible embodiment, the delivery prompt information may be output in a manner of a voice broadcasting. The user terminal may extract a text of the delivery prompt information, convert the text into voice, and then broadcast the delivery prompt information through an external audio device or a self-contained audio device of the user terminal. In this way, in a case where the first user neglects a first prompt information, the first user may be aware of that the state information of the first portable power does not meet the preset condition through listening.

In a possible embodiment, the delivery prompt information may be output in a manner of a pop-up window on the user terminal and in a manner of a voice broadcasting at the same time. The first user may trigger the confirmation instruction through a voice input, a manual input (such as sliding, clicking), a specific action input (such as nodding), or the like. In order to trigger the confirmation instruction through the specific action input, it is necessary to use a shooting apparatus of the user terminal to shoot the current action of the first user. As can be seen, the first user can trigger the confirmation instruction through multiple manners, which is beneficial for the first user to trigger the confirmation instruction through different manners in various actual situations.

It may be noted that, the delivery prompt information may be output in a manner of a pop-up window on the user terminal, or in a manner of a voice broadcasting, or may be output in both manners at the same time, which can be flexibly set according to different requirements of the first user, and is not limited in embodiments of the disclosure.

The delivery prompt information is output by the user terminal when the live-streaming application is running, the shooting apparatus is used, and the state information of the first portable power does not meet the preset condition. Specifically, when a live-streaming application is running in the background of the user terminal and a camera of the user terminal is also being used, that is, when the user is live-streaming, the user terminal obtains the state information of the first portable power in real time (such as voltage, current, and power of each port). The user terminal outputs the delivery prompt information when an abnormal parameter in the obtained state information is detected. The above interaction between the user terminal and the first portable power may be realized through a specific application in the user terminal, and the specific application may be an application dedicated for the user terminal to check the usage state of the first portable power. It may be seen that the user terminal can directly obtain the state information of the first portable power in real time from the first portable power based on the data interaction with the first portable power, and can be timely aware of the abnormal state of the portable power and remind the first user to replace the portable power, which is beneficial for replacing the portable power in time.

It may be noted that, the user terminal may obtain the state information of the first portable power in real time when the first portable power is being used and the first user does not conduct any live-streaming activity, and when the state information of the first portable power does not meet the preset condition, the user terminal outputs the delivery prompt information to prompt the user whether to replace the portable power, which is not limited in embodiments of the disclosure.

In a possible embodiment, the user terminal determines a power requirement information in response to a confirmation instruction, where the confirmation instruction is input by the first user in response to the delivery prompt information. The power requirement information may include one or two of a device attribute parameter of a power-consumption device using the first portable power or outdoor activity indication information. The user terminal generates a delivery request for the portable power based on the power requirement information, and sends the delivery request to the server.

In a possible embodiment, the user terminal may obtain the device attribute parameter of the power-consumption device using the first portable power in response to the confirmation instruction, where the confirmation instruction is input by the first user in response to the delivery prompt information. The device attribute parameter of the power-consumption device may include one or two of interface types or a power consumption parameter of the power-consumption device that currently uses the first portable power. The device attribute parameter of the power-consumption device may further include one or two of interface types that are recently used (for example, in a duration within a preset duration before the current time) or the power consumption parameter of the first portable power. The user terminal generates the delivery request for the portable power based on the device attribute parameter of the power-consumption device, and sends the delivery request to the server. In this way, it is beneficial for the server to better screen out a portable power subsequently based on the device attribute parameter of the power-consumption device using the first portable power, so that the power-consumption device being used by the first user can function normally using the screened portable power.

In a possible embodiment, the user terminal may further obtain the outdoor activity indication information in response to the confirmation instruction, where the confirmation instruction is input by the first user in response to the delivery prompt information and the outdoor activity indication information is input by the first user in response to the delivery prompt information. The outdoor activity indication information includes one or two of the duration of continued usage of the portable power or the type of outdoor activity. The delivery request for the portable power is generated based on the outdoor activity indication information, and the delivery request is sent to the server. As can be seen, the first user may input a duration of continued usage of the portable power and the type of outdoor activity to be conducted subsequently according to the requirements of the first user, so that the portable power screened out by the server subsequently is more in line with the actual requirements of the first user.

At S202, the server determines a first battery exchange station within a preset distance range from the location of the user terminal in response to the delivery request.

In a possible embodiment, the server may obtain the location of the user terminal, and then searches, based on the location of the user terminal, the first battery exchange station within the preset distance range from the location of the user terminal through the internet. Searching through the internet may specifically refers to sending the location of the user terminal to a related server by the server, thereby achieving a big data searching.

In a possible embodiment, the delivery request may contain the location of the user terminal. The server may obtain the location of the user terminal from the delivery request.

Specifically, the related server described above may be a server provided in an internet map platform. If there is no battery exchange station within the preset distance range from the user terminal, the server determines a battery exchange station closest to the user terminal as the first battery exchange station.

It may be seen that, in this embodiment, the server can determine an available battery exchange station within the preset distance range from the user terminal based on the location of the user terminal, so that a portable power for replacement may be delivered before the first portable power runs out of battery, which is more in line with the actual requirement of exchanging the portable power.

At S203, the server determines a second portable power that matches the delivery request from portable powers included in the first battery exchange station.

After the server obtains the delivery request and determines the first battery exchange station, the server determines the second portable power from portable powers included in the first battery exchange station.

In a possible embodiment, the server determines the second portable power that matches the delivery request from portable powers included in the first battery exchange station as follows. The server obtains the power requirement information contained in the delivery request, where the power requirement information includes one or two of a device attribute parameter of a power-consumption device or outdoor activity indication information. The server determines target interface types and a target battery capacity that match the power requirement information. The server determines the second portable power from rentable portable powers included in the first battery exchange station based on the target interface types and the target battery capacity.

It may be seen that, in the embodiment of the disclosure, the server can match a second outdoor power based on the power requirement information contained in the delivery request. The first user can further put forward requirements for a second power, and the second portable power screened out by the server can satisfy personalized requirements of the first user, thereby improving the delivery experience for the user.

The power requirement information includes one or two of the device attribute parameter of the power-consumption device or the outdoor activity indication information. The device attribute parameter includes one or more of the interface types or the power consumption parameter. The outdoor activity indication information includes one or more of the duration of continued usage of the portable power or the type of outdoor activity.

It may be understood that, when determining the target battery capacity, the power consumption parameter and the duration of continued usage are proportional to the target battery capacity. That is, a greater power consumption parameter or a longer duration of continued usage corresponds to a greater target battery capacity, and a smaller power consumption parameter or a shorter duration of continued usage corresponds to a smaller target battery capacity.

In other possible embodiments, the server determines the second portable power from rentable portable powers included in the first battery exchange station based on the target interface types and the target battery capacity as follows. The server matches interface types of each rentable portable power included in the first battery exchange station with the target interface types and a battery capacity of each rentable portable power with the target battery capacity, to obtain a matching degree of each rentable portable power. The server determines a rentable portable power with the highest matching degree as the second portable power. Specifically, the server firstly screens out rentable portable powers with battery capacities greater than or equal to the target battery capacity, and then matches the screened portable powers in terms of the interface types. Finally, the server determines a portable power with the highest matching degree in terms of the interface types as the second portable power. For example, during the matching process, a total matching degree is 100%, whether the battery capacity is matched accounts for 50% of the total matching degree, and the matching degree of the interface types accounts for 50% of the total matching degree. If a battery capacity is greater than or equal to the target battery capacity, the battery capacity is matched. Otherwise, the battery capacity is not matched. The interface types include types and the quantity of interface types. The matching degree of the interface types is evenly distributed based on the total quantity of interface types, and then the matching degree of the interface types is determined based on the quantity of interfaces that match the target interface types. Finally, the matching degree in terms of the battery capacity and the matching degree in terms of the interface types of each portable power are added to obtain the total matching degree between the portable power and the second portable power.

It may be seen that, in this embodiment of the disclosure, the server can match the portable power in a more accurate manner to obtain the matching degree of the portable power. A second portable power determined based on the matching degree will be more in line with the actual requirement of the first user.

In a possible embodiment, in a case where the second portable power with the highest matching degree does not reach a perfect match in terms of the battery capacity and the interface types, the matching of the battery capacity will be given priority, and the server will add indication information of delivering an interface conversion device (such as a patch panel, an interface converter) in the delivery task.

It may be seen that, in this embodiment of the disclosure, the server adds the indication information of delivering an interface conversion device in the delivery task, thereby ensuring that the second portable power received by the first user may be normally used by the power-consumption device.

At S204, the server generates a delivery task for the second portable power based on the location of the user terminal and indication information of the second portable power, where the indication information of the second portable power includes identification information and location information.

In a possible embodiment, after determining the second portable power, the server obtains the indication information of the second portable power, where the indication information includes the identification information and the location information. The delivery task is generated based on the indication information and the location of the user terminal.

At S205, the server sends the delivery task for the second portable power to a delivery terminal, where the delivery task indicates that the second portable power is to be delivered to the location of the user terminal.

The delivery task indicates that the second portable power is to be delivered to the location of the user terminal. The delivery terminal may output the delivery task after receiving the delivery task, where the delivery task may include the location of the second portable power, the indication information of the second portable power, and the location of the user terminal. The delivery task indicates that a second user (such as a deliverer) obtains the second portable power, and delivers the obtained second portable power to the location of the user terminal.

In a possible embodiment, the delivery terminal may be an intelligent mobile platform (such as an intelligent robot, a drone). The mobile platform can deliver the second portable power based on a received delivery task. Specifically, the mobile platform receives the delivery task, finds a battery exchange station where the second portable power is located based on the location information of the second portable power in the delivery task, and then obtains the second portable power from the battery exchange station based on the indication information of the second portable power. Finally, the mobile platform delivers the second portable power to the location of the user terminal. In this way, the second portable power is delivered by the mobile platform, thereby allowing the outdoor activity of the user to be continued normally, and improving the user experience of using the portable power.

It may be seen that, in embodiments of the disclosure, after the server receives the delivery request sent by the user terminal in response to the confirmation instruction that is triggered by the first user, the server obtains the location of the user terminal. The server obtains the first battery exchange station within the preset distance range based on the location of the user terminal, and determines the second portable power that matches the delivery request from portable powers included in the first battery exchange station. The server then generates the delivery task based on the indication information of the second portable power and the location of the user terminal. The indication information includes location information and identification information of the second portable power. Finally, the delivery task is sent to the delivery terminal, where the delivery task indicates that the second portable power is to be delivered to the location of the user terminal. According to the method, users do not need to go to a battery exchange station when replacing a power, thereby allowing their outdoor activities to be continued normally and improving user experience of using the portable power.

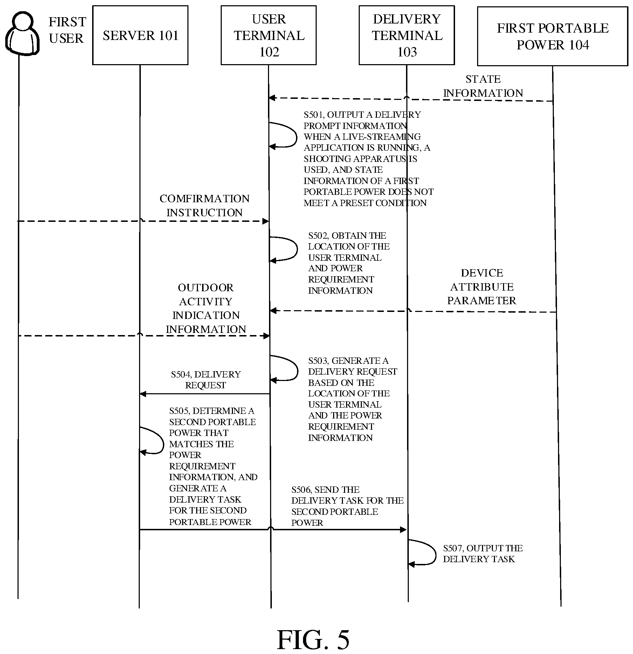

Reference is made to FIG. 5, which is a schematic flow chart of another portable power management method provided in an embodiment of the disclosure. The portable power management method may be executed by the above server 101, the user terminal 102, the delivery terminal 103, and the first portable power 104. As illustrated in FIG. 5, the method includes the following.

At S501, a user terminal outputs a delivery prompt information when a live-streaming application is running, a shooting apparatus is used, and state information of a first portable power does not meet a preset condition.

The delivery prompt information is used to prompt whether to replace the first portable power.

At S502, the user terminal obtains a location of the user terminal and power requirement information in response to a confirmation instruction, where the confirmation instruction is input by a first user in response to the delivery prompt information.

The power requirement information includes one or two of a device attribute parameter of a power-consumption device or outdoor activity indication information.

At S503, the user terminal generates a delivery request based on the location of the user terminal and the power requirement information.

At S504, the user terminal sends the delivery request to the server, and accordingly, the server receives the delivery request.

At S505, the server determines a second portable power that matches the power requirement information in response to the delivery request, and generates a delivery task for the second portable power.

At S506, the server sends the delivery task for the second portable power to a delivery terminal.

At S507, the delivery terminal outputs the delivery task.

The delivery task indicates that the second portable power is to be delivered to the location of the user terminal.

The specific implementation method of operations at S501-S507 may refer to the related description in the above embodiments, which will not be repeated herein.

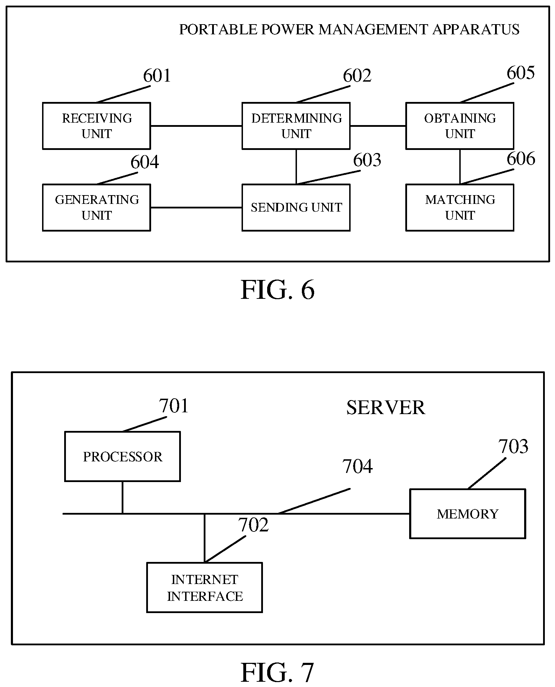

Reference is made to FIG. 6, which is a schematic structural diagram of a portable power management apparatus provided in an embodiment of the disclosure. The portable power management apparatus illustrated in FIG. 6 may include a receiving unit 601, a determining unit 602, a generating unit 604, and a sending unit 603. The receiving unit 601 is configured to receive a delivery request sent by the user terminal, where the delivery request is sent in response to a confirmation instruction. The determining unit 602 is configured to determine a first battery exchange station within a preset distance range from the location of the user terminal in response to the delivery request. The determining unit 602 is further configured to determine a second portable power that matches the delivery request from portable powers included in the first battery exchange station. The generating unit 604 is configured to generate a delivery task for the second portable power based on the location of the user terminal and indication information of the second portable power. The sending unit 603 is configured to send the delivery task for the second portable power to a delivery terminal, where the delivery task indicates that the second portable power is to be delivered to the location of the user terminal.

Optionally, the determining unit 602 is configured to determine the second portable power that matches the delivery request from portable powers included in the first battery exchange station. An obtaining unit 605 is configured to obtain the power requirement information contained in the delivery request; determine target interface types and a target battery capacity that match the power requirement information; determine the second portable power from rentable portable powers included in the first battery exchange station based on the target interface types and the target battery capacity.

Optionally, the determining unit 602 is configured to determine the second portable power from rentable portable powers included in the first battery exchange station based on the target interface types and the target battery capacity includes the following. Interface types of each rentable portable power included in the first battery exchange station are matched with the target interface types and a battery capacity of each rentable portable power with the target battery capacity, to obtain a matching degree of each rentable portable power. The portable power management apparatus further includes a matching unit 606. A rentable portable power with the highest matching degree is determined as the second portable power.

Optionally, the sending unit 603 is specifically configured to add indication information of delivering an interface conversion device to the delivery task when interface types of the second portable power match the target interface types in part or do not match the target interface types at all.

Optionally, the portable power management apparatus further includes the obtaining unit 605. The obtaining unit is configured to obtain a location of a user terminal. The determining unit 602 is configured to determine a second battery exchange station closest to the location of the user terminal. The determining unit 602 is configured to determine a battery level threshold based on a distance between the second battery exchange station and the user terminal. The sending unit 603 is configured to send the battery level threshold to the user terminal.

In the embodiment of the disclosure, after the receiving unit 601 receives the delivery request sent by the user terminal in response to the confirmation instruction, the determining unit 602 determines a first battery exchange station within a preset distance range from the location of the user terminal in response to the delivery request, and the determining unit 602 determines a second portable power that matches the delivery request from portable powers included in the first battery exchange station. The generating unit 604 generates the delivery task for the second portable power based on the location of the user terminal and the indication information of the second portable power. Finally, the sending unit 603 sends the delivery task for the second portable power to the delivery terminal, where the delivery task indicates that the second portable power is to be delivered to the location of the user terminal. In this way, when the battery level of the portable power is insufficient during the usage of the portable power, users do not need to go to a battery exchange station to replace a power, thereby allowing their outdoor activities to be continued normally and improving user experience of using outdoor powers.

Reference is made to FIG. 7, which is a schematic structural diagram of a server provided in an embodiment of the disclosure. As illustrated in FIG. 7, the server provided in the embodiment may include one or more processors 701, one or more internet interfaces 702, and a memory 703. The above processor 701, the internet interface 702, and the memory 703 are connected through a bus 704. The memory 703 is used to store a computer program, and the computer program includes a program instruction. The processor 701 is used to execute the program instruction stored in the memory 703. The processor 701 is configured to invoke the program instruction to execute: receiving a delivery request sent by a user terminal, where the delivery request is sent in response to a confirmation instruction; determining a first battery exchange station within a preset distance range from the location of the user terminal in response to the delivery request; determining a second portable power that matches the delivery request from portable powers included in the first battery exchange station; generating a delivery task for the second portable power based on the location of the user terminal and indication information of the second portable power; sending the delivery task for the second portable power to a delivery terminal, wherein the delivery task indicates that the second portable power is to be delivered to the location of the user terminal.

Optionally, in terms of determining the second portable power that matches the delivery request from portable powers included in the first battery exchange station, the processor 701 is configured to invoke the program instruction to execute: obtaining the power requirement information contained in the delivery request; determining target interface types and a target battery capacity that match the power requirement information; determining the second portable power from rentable portable powers included in the first battery exchange station based on the target interface types and the target battery capacity.

Optionally, in terms of determining the second portable power from rentable portable powers included in the first battery exchange station based on the target interface types and the target battery capacity, the processor 701 is configured to invoke the program instruction to execute: matching interface types of each rentable portable power included in the first battery exchange station with the target interface types and a battery capacity of each rentable portable power with the target battery capacity, to obtain a matching degree of each rentable portable power; determining a rentable portable power with the highest matching degree as the second portable power.

Optionally, the processor 701 is configured to invoke the program instruction to further execute: adding indication information of delivering an interface conversion device to the delivery task when interface types of the second portable power match the target interface types in part or do not match the target interface types at all.

Optionally, the processor 701 is configured to invoke the program instruction to further execute: obtaining a location of a user terminal; determining a second battery exchange station closest to the location of the user terminal; determining a battery level threshold based on a distance between the second battery exchange station and the user terminal, and sending the battery level threshold to the user terminal.

It may be understood that, in the embodiment of the disclosure, the processor 701 may be a central processing unit (CPU), or the processor 701 may be another general purpose processor, a digital signal processor (DSP), an application-specific integrated circuit (ASIC), a field programmable gate array (FPGA) or another programmable logic device, a discrete gate or transistor logic device, a discrete hardware component, or the like. The general purpose processor may be a microprocessor, or the processor may be any conventional processor or the like.

Those of ordinary skill in the art may understand that all or some of the procedures of the methods in the embodiments may be implemented by a computer program instructing relevant hardware. The program may be stored in a computer-readable storage medium. When the program runs, the procedures of the methods embodiments may be included. The storage medium may be a magnetic disk, an optical disk, a read-only memory (ROM), a random access memory (RAM), or the like.

The foregoing embodiments are merely intended for describing the technical solutions of the disclosure, but not for limiting the disclosure. Although the disclosure is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions of embodiments of the disclosure.

## Claims

1. A portable power management method, comprising:
obtaining, by a server, a location of a user terminal, and determining a second battery exchange station closest to the user terminal;
determining, by the server, a battery level threshold based on a distance between the second battery exchange station and the user terminal, and sending the battery level threshold to the user terminal;
receiving, by the server, a delivery request sent by the user terminal, wherein the delivery request is sent in response to a confirmation instruction, the confirmation instruction is input by a first user in response to a delivery prompt information, and the delivery prompt information is output by the user terminal in response to a live-streaming application running, a shooting apparatus being used, and state information of a first portable power not meeting a preset condition; the delivery prompt information is used to prompt whether to replace the first portable power; and the state information of the first portable power comprises a remaining battery level or a power supply parameter, and the state information of the first portable power not meeting the preset condition comprises the remaining battery level of the first portable power being less than or equal to the battery level threshold;
determining, by the server, a first battery exchange station within a preset distance range from the location of the user terminal in response to the delivery request;
determining, by the server, a second portable power that matches the delivery request from portable powers comprised in the first battery exchange station, wherein the delivery request contains power requirement information, and the power requirement information comprises a device attribute parameter of a power-consumption device and outdoor activity indication information, wherein the outdoor activity indication information comprises one or more of a duration of continued usage of the first portable power or a type of outdoor activity;
generating, by the server, a delivery task for the second portable power based on the location of the user terminal and indication information of the second portable power, wherein the indication information of the second portable power comprises identification information and location information; and
sending, by the server, the delivery task for the second portable power to a delivery terminal, wherein the delivery task indicates that the second portable power is to be delivered to the location of the user terminal.

2. The method of claim 1, wherein determining, by the server, the second portable power that matches the delivery request from portable powers comprised in the first battery exchange station comprises:
obtaining, by the server, the power requirement information contained in the delivery request;
determining, by the server, target interface types and a target battery capacity that match the power requirement information; and
determining, by the server, the second portable power from rentable portable powers comprised in the first battery exchange station based on the target interface types and the target battery capacity.

3. The method of claim 2, wherein determining, by the server, the second portable power from rentable portable powers comprised in the first battery exchange station based on the target interface types and the target battery capacity, comprises:
matching, by the server, interface types of each rentable portable power comprised in the first battery exchange station with the target interface types and a battery capacity of each rentable portable power with the target battery capacity, to obtain a matching degree of each rentable portable power; and
determining, by the server, a rentable portable power with the highest matching degree as the second portable power.

4. The method of claim 2 or 3, wherein the device attribute parameter comprises one or more of interface types or a power consumption parameter, the device attribute parameter is obtained through statistics collection by the first portable power on the power-consumption device, and the device attribute parameter is sent to the user terminal by the first portable power; and the outdoor activity indication information is input by the first user in response to the delivery prompt information.

5. The method of claim 2 or 3, further comprising:
adding, by the server, indication information of delivering an interface conversion device to the delivery task, in response to interface types of the second portable power matching the target interface types in part or not matching the target interface types at all.

6. A portable power management apparatus, comprising:
an obtaining unit configured to obtain a location of a user terminal;
a determining unit configured to determine a second battery exchange station closest to the user terminal, and determine a battery level threshold based on a distance between the second battery exchange station and the user terminal;
a sending unit configured to send the battery level threshold to the user terminal;
a receiving unit configured to receive a delivery request sent by the user terminal, wherein the delivery request is sent in response to a confirmation instruction, the confirmation instruction is input by a first user in response to a delivery prompt information, and the delivery prompt information is output by the user terminal in response to a live-streaming application running, a shooting apparatus being used, and state information of a first portable power not meeting a preset condition; the delivery prompt information is used to prompt whether to replace the first portable power; and the state information of the first portable power comprises a remaining battery level or a power supply parameter, and the state information of the first portable power not meeting the preset condition comprises the remaining battery level of the first portable power being less than or equal to the battery level threshold;
the determining unit being further configured to, determine a first battery exchange station within a preset distance range from the location of the user terminal in response to the delivery request;
the determining unit being further configured to determine a second portable power that matches the delivery request from portable powers comprised in the first battery exchange station, wherein the delivery request contains power requirement information, and the power requirement information comprises a device attribute parameter of a power-consumption device and outdoor activity indication information, wherein the outdoor activity indication information comprises one or more of a duration of continued usage of the first portable power or a type of outdoor activity;
a generating unit configured to generate a delivery task for the second portable power based on the location of the user terminal and indication information of the second portable power, wherein the indication information of the second portable power comprises identification information and location information; and
the sending unit being further configured to send the delivery task for the second portable power to a delivery terminal, wherein the delivery task indicates that the second portable power is to be delivered to the location of the user terminal.

7. A server, comprising a processor, a network interface, and a memory, wherein the processor, the network interface, and the memory are interconnected, and the memory is configured to store a computer program; the computer program comprises a program instruction, and the processor is configured to invoke the program instruction to execute the portable power management method of any one of claims 1 to 5.

8. A computer-readable storage medium, wherein the computer-readable storage medium stores a computer program, and the computer program comprises a program instruction which, when executed by a processor, causes the processor to perform the portable power management method of any one of claims 1 to 5.
